# EUROPÄISCHE PATENTANMELDUNG

(11) **EP 1 314 586 A2**
(43) Veröffentlichungstag der Anmeldung: **28.05.2003**
(21) Anmeldenummer: 02020979.7
(22) Anmeldetag: 20.09.2002
(51) Int. Cl.: B60G 17/04, F16F 9/08

(54) **Niveauregulierung für ein hydropneumatischen Federbein**

(30) Priorität: 24.11.2001 DE 10157713
(71) Anmelder: DaimlerChrysler AG, 70567 Stuttgart (DE)
(72) Erfinder: Streiter, Ralph, Dr., 70193 Stuttgart (DE)

(57) **Zusammenfassung**

Die Erfindung betrifft ein Feder-Dämpfersystem eines Rades aus mindestens zwei - mit einem den Durchfluss einer Flüssigkeit steuernden Element - kommunizierenden Behältern (60,70), wobei mindestens ein Behälter (70) auf der einen Seite des den Durchfluss steuernden Elements ein Verdränger mit variablem Hub ist und mindestens ein Behälter auf der anderen Seite des den Durchfluss steuernden Elements ein Hydrospeicher (60) ist, der ein Gaspolster (65) umfasst, das mittels eines Trennelementes (63) von der Flüssigkeit getrennt ist. Hierbei ist das Gaspolster (65) mittels mindestens eines Ventils (55) mit mindestens einem fahrzeugzentralen Hochdruckspeicherbehälter (20) und mindestens einem fahrzeugzentralen Niederdruckspeicherbehälter (30) verbunden. Zwischen dem Niederdruckspeicherbehälter und dem Hochdruckspeicherbehälter ist eine Pumpe (12) angeordnet. Ein den Druck im Hochdruckspeicherbehälter und im Niederdruckspeicherbehälter vergleichendes Element (16) schaltet beim Unterschreiten einer voreingestellten Druckdifferenz dieser Drücke die Pumpe ein.

Mit der vorliegenden Erfindung wird ein Feder-Dämpfersystem entwickelt, das einem Absinken des Fahrzeugaufbaus bei Belastung ohne Beeinträchtigung des Fahrkomforts entgegenwirkt.

## Beschreibung

Die Erfindung betrifft ein Feder-Dämpfersystem eines Rades aus mindestens zwei über einen Durchbruch oder eine hydraulische Leitung - mit einem den Durchfluss einer Flüssigkeit steuernden Element - kommunizierenden Behältern, wobei mindestens ein Behälter auf der einen Seite des den Durchfluss steuernden Elements ein zwischen dem Fahrwerk und dem Fahrzeugaufbau angeordneter Verdränger mit variablem Hub ist und mindestens ein Behälter auf der anderen Seite des den Durchfluss steuernden Elements ein Hydrospeicher ist, der ein Gaspolster umfasst, das mittels eines in der Form und/oder in der Lage veränderlichen Trennelementes von der Flüssigkeit getrennt ist.

Aus der DE 199 61 717 A1 ist ein derartiges Feder-Dämpfersystem bekannt. Dieses umfasst einen Verdränger, einen Hydrospeicher und eine diese verbindende Hydraulikleitung. In der Hydraulikleitung ist ein mechanisches Drosselventil angeordnet. Der Verdränger verbindet die Fahrzeugradaufhängung mit dem Fahrzeugaufbau. Das System ist mit einer hydraulischen Flüssigkeit befüllt. Bei einer Belastung des Fahrzeugaufbaus wird das einzelne Fahrzeugrad eingefedert. Die hydraulische Flüssigkeit wird durch das Drosselventil in den Hydrospeicher verdrängt. Der Strömungswiderstand des Drosselventils erzeugt eine dämpfende Kraft. Im Hydrospeicher trennt eine Trennmembran die Flüssigkeit von einem Gaspolster. Bei der Verdrängung der hydraulischen Flüssigkeit in den Hydrospeicher wird das Gaspolster komprimiert, das dabei eine federnde Kraft bewirkt. Bei der Kompression des Gaspolsters steigt dessen Federsteifigkeit und damit die Eigenfrequenz überproportional an. Der Fahrkomfort des Fahrzeuges wird verringert.

Der vorliegenden Erfindung liegt daher die Problemstellung zugrunde, ein Feder-Dämpfersystem zu entwickeln, das einem Absinken des Fahrzeugaufbaus bei Belastung ohne Beeinträchtigung des Fahrkomforts entgegenwirkt. Die Lösung soll wenige, einfache und funktionssichere Teile umfassen.

Diese Problemstellung wird mit den Merkmalen des Hauptanspruches gelöst. Dazu ist das Gaspolster mittels mindestens eines radseitigen Ventils mit mindestens einem fahrzeugzentralen Hochdruckspeicherbehälter und mindestens einem fahrzeugzentralen Niederdruckspeicherbehälter verbunden, wobei das radseitige Ventil eine Sperrstellung, eine Entlastungsstellung und eine Befüllstellung aufweist, und wobei die Ventilstellungen gegeneinander verriegelt sind. In der Befüllstellung des Ventils ist das Gaspolster mit dem Hochdruckspeicherbehälter verbunden, während in der Entlastungsstellung das Ventil das Gaspolster mit dem Niederdruckspeicherbehälter verbindet. Zwischen dem Niederdruckspeicherbehälter und dem Hochdruckspeicherbehälter ist eine Pumpe angeordnet. Ein den Druck im Hochdruckspeicherbehälter und im Niederdruckspeicherbehälter vergleichendes Element schaltet beim Unterschreiten einer voreingestellten Druckdifferenz dieser Drücke die Pumpe ein. Außerdem ist am Verdränger eine Betätigungsvorrichtung angeordnet, die das Ventil in Abhängigkeit des Hubs des Verdrängers schaltet.

Der Verdränger, beispielsweise eine Zylinder-Kolbeneinheit, ist an jedem Rad angeordnet, wobei z.B. der Kolben und die Kolbenstange mit dem Rad verbunden sind. In einer Ausgangsposition liegt der Fahrzeugaufbau beispielsweise in der Konstruktionslage. Hierbei ist der Druck im Hochdruckspeicherbehälter z.B. höher als der Druck im Gaspolster und der Druck im Niederdruckspeicherbehälter z.B. niedriger als der Druck im Gaspolster.

Bei Belastung des Fahrzeuges senkt sich der Fahrzeugaufbau ab. Die aus dem Zylinder verdrängte hydraulische Flüssigkeit komprimiert das Gaspolster im Hydrospeicher. Die an der Kolbenstange angeordnete Betätigungsvorrichtung schaltet bei einem voreingestellten Hub der Kolbenstange beispielsweise relativ zum Zylinder das Ventil in die Befüllstellung. Vom Hochdruckspeicher strömt Gas in das Gaspolster des Hydrospeichers und bewirkt ein Verformen und/oder Versetzen des Trennelements des Hydrospeichers. Hierdurch wird hydraulische Flüssigkeit, gedämpft durch die Drossel, in den Zylinder der Zylinder-Kolbeneinheit verdrängt und bewirkt dort ein Ausfahren des Kolbens mit der Kolbenstange. Der Fahrzeugaufbau wird angehoben, bis die Betätigungsvorrichtung das Ventil in Sperrstellung schaltet. Das Fahrzeug liegt dann beispielsweise wieder in der Konstruktionslage. Das Volumen des Gaspolsters im Hydrospeicher entspricht nun zumindest annähernd dem Volumen des Gaspolsters vor der Belastung des Fahrzeugaufbaus. Die Steifigkeit des Gaspolsters wurde während der Kompression des Gaspolsters überproportional erhöht. Beim Anheben des Fahrzeugaufbaus wurde sie wieder verringert. Die Steifigkeit steigt so insgesamt annähernd proportional mit der Massenzunahme.

Gleichzeitig wird die Eigenfrequenz der Federung nur unwesentlich verändert, da die Steifigkeitszunahme der Feder mit der Massenzunahme bei der Beladung beispielsweise einen annähernd konstanten Quotienten bildet. Dies trägt u.a. zu einem annähernd gleichbleibenden Fahrverhalten gegenüber der unbelasteten Ausgangsposition bei.

Beim Entlasten des Fahrzeuges, z.B. beim Entladen, wird der äußere Druck auf das Gaspolster vermindert. Das Gaspolster dehnt sich aus und verschiebt das Trennelement. Hierbei wird hydraulische Flüssigkeit aus dem Hydrospeicher verdrängt und mittels der verdrängten hydraulischen Flüssigkeit wird der Kolben ausgeschoben. Hierbei wird der Fahrzeugaufbau angehoben. Die an der Kolbenstange angeordnete Betätigungseinrichtung schaltet bei einem eingestellten Hub der Kolbenstange das Ventil in die Entlastungsstellung. Nun ist das Gaspolster mit dem Niederdruckspeicherbehälter verbunden. Das Volumen des Gaspolsters nimmt ab und der Fahrzeugaufbau sinkt ab. Beispielsweise in der Konstruktionslage wird das Ventil in die Sperrstellung geschaltet. Das im Hydrospeicher verbleibende Gaspolster hat nun annähernd das gleiche Volumen wie in der Ausgangsposition. Auch die Eigenfrequenz und somit der Fahrkomfort entspricht annähernd den Verhältnissen in der Ausgangsposition.

Das Absenken des Niveaus kann unmittelbar nach einer Niveauerhöhung erfolgen, ohne dass dazu äußere Energie erforderlich wäre.

Nach Beendigung eines Anhebe- und/oder Absenkungsvorgangs werden die Drücke der beiden Druckspeicherbehälter miteinander verglichen, beispielsweise mit einem Differenzdruckschalter. Ist die Differenz beider Drücke geringer als ein am Differenzdruckschalter eingestellter minimaler Differenzwert, schaltet beispielsweise der Differenzdruckschalter die Pumpe zwischen dem Nieder- und dem Hochdruckspeicherbehälter ein. Der Gasdruck im Niederdruckspeicherbehälter wird nun verringert, während der Gasdruck im Hochdruckspeicherbehälter erhöht wird, bis eine voreingestellte Differenz der Drücke zum Abschalten der Pumpe erreicht wird.

Die beiden Druckspeicher sowie die Pumpe sind nur einmal im Fahrzeug vorhanden, während der Hydrospeicher, der Verdränger sowie das Sperrventil einmal pro Rad vorhanden sind.

Die gesamte Niveauregulierung arbeitet weitgehend ohne elektrische Bauteile. Sie ist kostengünstig und nur wenig störanfällig. Die Pumpe wird z.B. nur jeweils nach Beendigung eines Niveauanpassungsvorgangs zur Erzeugung des Differenzdruckes eingeschaltet. So ist beispielsweise nach dem Einschalten des Fahrzeugmotors keine äußere Energiezufuhr an die Niveauregulierung erforderlich, um das Niveau anzupassen. Da die Pumpe die Erzeugung der Druckdifferenz außerhalb der Niveauanpassung durchführt, ist die erforderliche Zeit hierfür unkritisch. Die Pumpe kann energetisch günstig ausgelegt werden. Der Energieaufwand für die Niveauregulierung ist gering.

Weitere Einzelheiten der Erfindung ergeben sich aus den Unteransprüchen und der nachfolgenden Beschreibung einer schematisch dargestellten Ausführungsform.

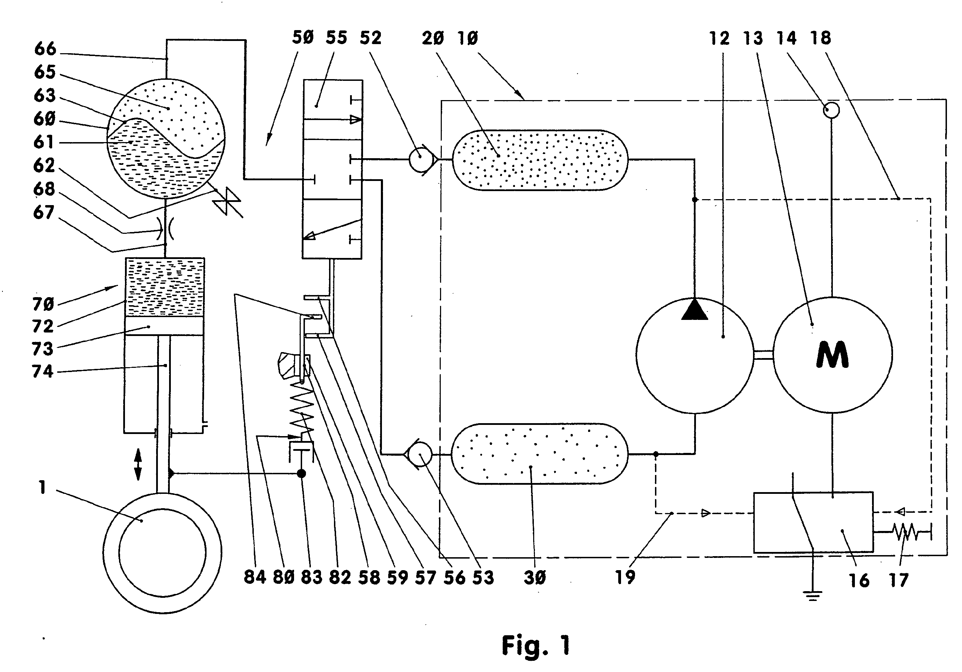

- Figur 1:: Prinzipschaltbild einer Niveauregulierung an einem hydropneumatischen Federbein.

Die Figur 1 zeigt das Prinzipschaltbild einer Niveauregulierung an einem hydropneumatischen Federbein. Die Niveauregulierung umfasst eine Zentraleinheit (10), die mindestens aus einer Pumpe (12) mit einem Antriebsmotor (13), beispielsweise einen Kolbenkompressor, einem Hochdruckspeicherbehälter (20), einem Niederdruckspeicherbehälter (30) sowie einen Differenzdruckschalter (16) besteht. Sie ist einmal pro Fahrzeug vorhanden. Ferner umfasst es eine radseitige Einheit (50), die einmal pro Fahrzeugrad (1) angeordnet ist.

In der Zentraleinheit (10) ist der Niederdruckspeicherbehälter (30) auf der Saugseite der Pumpe (12) angeordnet, während der Hochdruckspeicherbehälter (20) auf der Druckseite an die Pumpe (12) angeschlossen ist. Auf beiden Seiten der Pumpe (12) sind Messanschlüsse des Differenzdruckschalters (16) angeordnet. Letzterer schaltet den Motor (13) der Pumpe (12) ein, sobald eine Soll-Druckdifferenz zwischen der Druck- und der Saugseite der Pumpe (12) unterschritten ist. Der Motor (13) liegt während des Betriebes an einer Stromquelle (14), beispielsweise einer Batterie, an. Die Soll-Druckdifferenz wird am Differenzdruckschalter (16) beispielsweise über eine Feder (17) eingestellt. Ggf. kann mit einer zweiten Feder eine Ausschaltdruckdifferenz eingestellt werden. Die Druckdifferenz zwischen der Druck- und der Saugseite der Pumpe (12) ist gleich der Differenz der Drücke zwischen dem Hochdruckspeicherbehälter (20) und dem Niederdruckspeicherbehälter (30).

Die radseitige Einheit (50) umfasst ein hydropneumatisches Federbein, das hier vereinfacht z.B. als einseitig wirkende Zylinder-Kolbeneinheit (70) mit einem Hydrospeicher (60) dargestellt ist.

Der Kolben (73) und die Kolbenstange (74) der Zylinder-Kolbeneinheit (70) sind mit einem Rad (1) verbunden. An der Kolbenstange (74) ist außerdem eine Betätigungsvorrichtung (80) angeschlossen. Der Zylinder (72) der Zylinder-Kolben-Einheit (70) ist mit dem hier nicht dargestellten Fahrzeugaufbau verbunden.

Der Hydrospeicher (60) wird durch ein Trennelement (63) in einen Hydraulikbereich (61) und einen Gasbereich (65) getrennt. Das Trennelement (63) ist hierbei z.B. eine undurchlässige, flexible Membran (63).

Der Hydraulikbereich (61) des Hydrospeichers (60) ist beispielsweise mittels einer Hydraulikleitung (67), in der eine Drossel (68) angeordnet ist, mit dem Zylinder (72) verbunden. Die Drossel (68) hat hier z.B. einen konstanten Querschnitt.

Im Hydraulikbereich (61) ist beispielsweise ein Füllstutzen (62) angeordnet.

An den Gasbereich (65) des Hydrospeichers (60) ist eine Leitung (66) mit einem vorgeschalteten 3/3-Wegeventil (55) angeschlossen. Letzteres hat eine Sperr-Nullstellung und zwei Durchflussstellungen. Diese Durchflussstellungen werden im Folgenden als Befüllstellung und als Entlastungsstellung bezeichnet. Zur Betätigung umfasst das 3/3-Wegeventil zwei z.B. einstellbare Mitnehmer (56, 57). Ggf. können die einzelnen Schaltstellungen des 3/3-Wegeventils (55) verrastet sein. Bei Leckagen kann das 3/3-Wegeventil (55) z.B. federbelastet schließen.

In der Befüllstellung des 3/3-Wegeventils (55) ist das Gaspolster (65) des Hydrospeichers (60) über ein Rückschlagventil (52) an den zentralen Hochdruckspeicherbehälter (20) angeschlossen. Das Rückschlagventil (52) ist hierbei Teil der radseitigen Einheit (50). Es sperrt in Richtung des Hochdruckspeicherbehälters (20).

In der Entlastungsstellung des 3/3-Wegeventils (55) ist das Gaspolster (65) des Hydrospeichers (60) über ein Rückschlagventil (53) mit dem zentralen Niederdruckspeicherbehälter (30) verbunden. Auch dieses Rückschlagventil (53) ist Teil der radseitigen Einheit (50). Es sperrt in Richtung des Gaspolsters (65).

Die Betätigungsvorrichtung (80) umfasst eine Feder (82) sowie einen Betätigungshaken (84). Sie ist biege- und verwindungssteif an der Kolbenstange (74) befestigt. Ggf. umfasst die Betätigungsvorrichtung (80) ein Übersetzungsgetriebe, das beispielsweise aus zwei Hebelarmen und einem vertikal geführten Anlenkpunkt besteht. Die Feder (82), beispielsweise eine Zugfeder, ist zumindest annähernd parallel zur Kolbenstange (74) ausgerichtet. Oberhalb der Feder (82) wird die Betätigungsvorrichtung (80) beispielsweise in einer Bohrung (58) eines z.B. fahrzeugseitigen Führungselements (59) geführt. Hierbei kann die Betätigungsvorrichtung (80) in der Bohrung (58) anliegen. Um ein Verkanten zu vermeiden, ist dann ggf. unterhalb der Feder (82) an der Betätigungsvorrichtung (80) ein Ausgleichsgelenk (83) angeordnet. Oberhalb der Feder (82) und oberhalb der Bohrung (58) ist der Betätigungshaken (84) angeordnet. Ein freies Ende des Betätigungshakens (84) liegt z.B. bei einer halb ausgefahrenen Kolbenstange (74) annähernd mittig zwischen den zwei Mitnehmern (56, 57) des 3/3-Wegeventils (55).

In einer Ausgangssituation sind beispielsweise die Druckspeicherbehälter (20, 30) sowie der Gasbereich (65) des Hydrospeichers (60) mit Gas gefüllt. Hierbei ist z.B. der Druck des Gases im Hockdruckspeicherbehälter (20) höher als der Druck im Gaspolster (65) und dieser wiederum höher als der Druck im Niederdruckspeicherbehälter (30). Die Pumpe (12) ist ausgeschaltet. Die Kolbenstange (74) steht beispielsweise in einer Position mit mittlerem Hub.

Beim Belasten des Fahrzeuges fährt die Kolbenstange (74) der Zylinder-Kolbeneinheit (70) ein, wobei der Kolben (73) hydraulische Flüssigkeit gedrosselt in den Hydraulikbereich (61) des Hydrospeichers (60) verdrängt. Die Membran (63) wird verformt und komprimiert das Gaspolster (65) im Hydrospeicher (60). Beim Einfahren der Kolbenstange (74) wird die Betätigungsvorrichtung (80), ggf. reibungsbehaftet in der Bohrung (58), relativ zum 3/3-Wegeventil (55) nach oben, vgl. Figur 1, bewegt. Sobald der Betätigungshaken (84) den oberen Mitnehmer (56) erreicht hat, wird das 3/3-Wegeventil (55) in die Befüllstellung geschaltet. In dieser Befüllstellung strömt Gas aus dem Hockdruckspeicherbehälter (20) in das Gaspolster (65). Hierbei wird der Gasdruck im zentralen Hockdruckspeicherbehälter (20), an den die Feder-Dämpfersysteme aller Räder (1) angeschlossen sind, nur wenig verringert, während der Druck im radseitigen Gaspolster (65) deutlich erhöht wird.

Gleichzeitig wird die Membran (63) im Hydrospeicher (60) verformt und verdrängt hydraulische Flüssigkeit aus dem Hydrospeicher (60) durch die Drossel (68) in die Zylinder-Kolbeneinheit (70). Hierdurch wird der Kolben (73) sowie die Kolbenstange (74) ausgeschoben und der Fahrzeugaufbau angehoben. Die an die Kolbenstange (74) angeschlossene Betätigungsvorrichtung (80) wird relativ zum 3/3-Wegeventil (55) nach unten bewegt. Sobald der Betätigungshaken (84) den unteren Mitnehmer (57) berührt hat, wird beim weiteren Ausfahren der Kolbenstange (74) das 3/3-Wegeventil (55) in die Sperrstellung geschaltet.

Wird das Fahrzeug entladen, dehnt sich das Gaspolster (65) im Hydrospeicher (60) aus und verformt die Membran (63) in Richtung des Hydraulikbereichs (61). Die aus dem Hydraulikbereich (61) durch die Drossel (68) verdrängte hydraulische Flüssigkeit schiebt die Kolbenstange (74) aus. Die Betätigungsvorrichtung (80) wird, ggf. reibungsbehaftet in der Bohrung (58), mit der Kolbenstange (74) nach unten bewegt, vgl. Figur 1, bis der Betätigungshaken (84) den unteren Mitnehmer (57) des 3/3-Wegeventils (55) berührt. Sobald die Feder (82) entsprechend belastet ist, wird das 3/3-Wegeventil (55) in die Entlastungsstellung geschaltet. Das Gas strömt nun vom Gaspolster (65) in den Niederdruckspeicherbehälter (30). Hierbei wird der Druck im Gaspolster (65) erheblich verringert, aber der Druck im zentralen Niederdruckspeicherbehälter (30) wird nur um einen geringen Betrag erhöht. Mit nachlassendem Gasdruck des Gaspolsters (65) verdrängt der Kolben (73) hydraulische Flüssigkeit aus der Zylinder-Kolbeneinheit (70) zurück in den Hydrospeicher (60). Die Kolbenstange (74) fährt ein und führt den Betätigungshaken (84) ggf. reibungsbehaftet nach oben in Richtung des oberen Mitnehmers (56). Ist dieser erreicht, wird das 3/3-Wegeventil (55) nach oben in die Sperrstellung geschaltet.

Während das Fahrzeugaufbauniveau z.B. an vier Rädern eines Fahrzeuges angehoben wird, wird der Druck im Hochdruckspeicherbehälter (20) abgesenkt, während der Druck im Niederdruckspeicher (30) sich nicht ändert. Beim Absenken des Fahrzeugniveaus nach der Entlastung des Fahrzeuges wird der Druck im Niederdruckspeicher (30) erhöht, während der Druck im Hochdruckspeicher (20) sich nicht ändert. Die Druckdifferenz zwischen beiden Speicherbehältern (20, 30) nimmt ab. Hat diese Differenz eine am Differenzdruckschalter (16) voreingestellte Differenz unterschritten, fördert die Pumpe (12) Gas aus dem Niederdruckspeicherbehälter (30) in den Hockdruckspeicherbehälter (20). Hierbei wird der Druck im Niederdruckspeicherbehälter (30) abgesenkt und der Druck im Hochdruckspeicherbehälter (20) erhöht. Dieser Vorgang wird abgeschlossen, wenn eine am Differenzdruckschalter (16) eingestellte minimale Druckdifferenz zwischen dem Druck am Niederdruckspeicherbehälter (30) und dem Druck im Hochdruckspeicherbehälter (20) erreicht wird. Ggf. kann die voreingestellte Differenz zum Ausschalten des Motors (13) der Pumpe (12) höher sein als die voreingestellte Differenz zum Einschalten des Motors (13).

Die Druckdifferenzprüfung wird im allgemeinen spätestens nach einem kompletten Anhebe- und Absenkvorgang oder nach einem Absenkvorgang mit nachfolgendem Anhebvorgang durchgeführt. Je nach Voreinstellung des Differenzdrucks und der Größe der Druckspeicherbehälter (20, 30) kann die Prüfung selbstverständlich auch nach der Niveauänderung an jedem einzelnen Rad (1), nach jedem einzelnen Anhebe- oder Absenkvorgang oder nach mehreren Zyklen erfolgen.

Die Volumina der Druckspeicherbehälter (20, 30) sind im Ausführungsbeispiel annähernd gleich, jedoch kann beispielsweise der Niederdruckspeicherbehälter (30) ein größeres Volumen aufweisen als der Hochdruckspeicherbehälter (20).

Die Druckspeicherbehälter (20, 30) sind beispielsweise einmal pro Fahrzeug vorhanden. Ihr Volumen ist dann z.B. so groß, dass jeweils an allen Rädern (1) das Niveau des Fahrzeugaufbaus von einer abgesenkten Extremlage in eine angehobene Extremlage gebracht werden kann und umgekehrt. Der Druck im Hochdruckspeicherbehälter (20) ist dann beispielsweise so gewählt, dass er immer höher ist als der höchste Druck in einem der Gaspolster (65). Der Druck im Niederdruckspeicherbehälter (30) ist dann z.B. niedriger als der niedrigste Druck in einem der Gaspolster (65) des Fahrzeuges. So kann das Niveau des Fahrzeugaufbaus an allen Rädern (1) verändert werden, ohne dass die am Differenzdruckschalter (16) ermittelte Differenz den eingestellten Mindestdifferenzwert unterschreitet. Die Pumpe (12) wird dann während des Anhebens oder des Absenkens des Fahrzeugaufbaus nicht eingeschaltet.

Die Pumpe (12) hält hierbei nur eine relative Druckdifferenz zwischen den Drücken im Niederdruckspeicherbehälter (30) und im Hochdruckspeicherbehälter (20) aufrecht. Die Anforderungen an dieses Bauteil sind daher gering.

Die Betätigungsvorrichtung (80) schaltet das 3/3-Wegeventil (55) erst, wenn der Betätigungshaken (84) einen der Mitnehmer (56, 57) erreicht hat. Diese Mitnehmer (56, 57) haben einen beispielsweise voreingestellten Abstand zueinander. Der Fahrzeugaufbau wird also immer um einen durch den Abstand der Mitnehmer (56, 57) bestimmten Betrag angehoben oder abgesenkt.

Wird dann beispielsweise ein weiteres Rad (1) gegenüber dem Fahrzeugaufbau ausgefahren, führt dies nicht zu einer Verspannung des Systems. Der Fahrzeugaufbau kann sich im Bereich des ersten Rades (1) in der Höhe versetzen, ohne dass die Niveauregulierung anspricht.

Beim Erreichen der Mitnehmer (56, 57) wird der Hub der Feder (82) vergrößert oder verkleinert. Erst dann wird das 3/3-Wegeventil (55) geschaltet. Es entsteht so, ggf. unterstützt durch die Reibung in der Bohrung (58) und/oder ein Dämpfungselement, vgl. Figur 1, eine Hysterese an den Schaltpunkten. Der Schaltpunkt muss also erst überschritten sein, bevor das 3/3-Wegeventil (55) geschaltet wird. So wird ein Schaltflimmern am jeweiligen Schaltpunkt vermieden.

Statt eines 3/3-Wegeventils (55) kann auch z.B. ein 4/3-Wegeventil oder ein 5/3-Wegeventil eingesetzt werden. Auch der Einsatz von zwei z.B. 2/2-Wegeventilen mit je einer Sperr-Nullstellung und je einer Durchflussstellung ist denkbar. Hierbei schaltet dann z.B. ein Ventil von einer Sperrstellung in die Befüllstellung, das andere Ventil in die Entlastungsstellung. In diesem Fall sind aber die Durchflussstellungen der beiden Ventile gegeneinander zu verriegeln.
Die Ventile an den einzelnen Rädern (1) können auch z.B. über ein Vorventil pneumatisch betätigt werden, z.B. in der Bauform eines Proportionalventils.

Im Fahrzeug kann statt einer radweisen Niveauregulierung beispielsweise auch eine achsweise Niveauregulierung angeordnet sein. Die Betätigungsvorrichtung (80) und das 3/3-Wegeventil (55) sind dann z.B. einmal pro Achse angeordnet. Die Hydrospeicher (60) einer Achse sind dann parallel geschaltet.

Auch kann zusätzliches Öl in die Zylinder-Kolben-Einheit (70) zugeführt werden. Hierdurch wird dann beispielsweise bei einer nachfolgenden gasseitigen Niveauregulierung die Steifigkeit des Gaspolsters (65) zusätzlich beeinflusst.

So kann von einer Grundvariante aus kostengünstig durch Erweiterungen ein komplexes System zur Fahrwerkregulierung erzeugt werden.

## Patentansprüche

1. Feder-Dämpfersystem eines Rades aus mindestens zwei über einen Durchbruch oder eine hydraulische Leitung - mit einem den Durchfluss einer Flüssigkeit steuernden Element - kommunizierenden Behältern, wobei mindestens ein Behälter auf der einen Seite des den Durchfluss steuernden Elements ein zwischen dem Fahrwerk und dem Fahrzeugaufbau angeordneter Verdränger mit variablem Hub ist und mindestens ein Behälter auf der anderen Seite des den Durchfluss steuernden Elements ein Hydrospeicher ist, der ein Gaspolster umfasst, das mittels eines in der Form und/oder in der Lage veränderlichen Trennelementes von der Flüssigkeit getrennt ist, **dadurch gekennzeichnet,**
- **dass** das Gaspolster (65) mittels mindestens eines radseitigen Ventils (55) mit mindestens einem fahrzeugzentralen Hochdruckspeicherbehälter (20) und mindestens einem fahrzeugzentralen Niederdruckspeicherbehälter (30) verbunden ist, wobei das radseitige Ventil (55) eine Sperrstellung, eine Entlastungsstellung und eine Befüllstellung aufweist, und wobei die Ventilstellungen gegeneinander verriegelt sind,
- **dass** in der Befüllstellung des Ventils (55) das Gaspolster (65) mit dem Hochdruckspeicherbehälter (20) verbunden ist, während in der Entlastungsstellung das Ventil (55) das Gaspolster (65) mit dem Niederdruckspeicherbehälter (30) verbindet,
- **dass** zwischen dem Niederdruckspeicherbehälter (30) und dem Hochdruckspeicherbehälter (20) eine Pumpe (12) angeordnet ist,
- **dass** ein den Druck im Hochdruckspeicherbehälter (20) und im Niederdruckspeicherbehälter (30) vergleichendes Element (16) beim Unterschreiten einer voreingestellten Druckdifferenz dieser Drücke die Pumpe (12) einschaltet, und
- **dass** am Verdränger (70) eine Betätigungsvorrichtung (80) angeordnet ist, die das Ventil (55) in Abhängigkeit des Hubs des Verdrängers (70) schaltet.

2. Feder-Dämpfersystem nach Anspruch 1, **dadurch gekennzeichnet, dass** die Betätigungsvorrichtung (80) reibungsbehaftet bewegt wird.

3. Feder-Dämpfersystem nach Anspruch 1, **dadurch gekennzeichnet, dass** der Niederdruckspeicherbehälter (30) mindestens das gleiche Volumen hat wie der Hochdruckspeicherbehälter (20).

4. Feder-Dämpfersystem nach Anspruch 1, **dadurch gekennzeichnet, dass** zwischen den Druckspeicherbehältern (20, 30) und dem Ventil (55) jeweils ein Rückschlagventil (52, 53) angeordnet ist.

5. Feder-Dämpfersystem nach Anspruch 1, **dadurch gekennzeichnet, dass** das den Druck vergleichende Element (16) ein Differenzdruckschalter ist.

6. Feder-Dämpfersystem nach Anspruch 1, **dadurch gekennzeichnet, dass** das Trennelement (63) im Hydrospeicher (60) eine Membran ist.
